# FASCICULE DE BREVET EUROPEEN

(11) **EP 1 102 953 B1**
(45) Date de publication et mention de la délivrance du brevet: **30.07.2003**
(21) Numéro de dépôt: 99936687.5
(22) Date de dépôt: 04.08.1999
(51) Int. Cl.: F25J 3/04, F25J 3/02

(54) **INSTALLATION DE PRODUCTION D'ELECTRICITE BASSE TENSION INTEGREE A UNE UNITE DE SEPARATION DES GAZ DE L'AIR**
ANLAGE ZUR ERZEUGUNG VON NIEDERSPANNUGSSTROM MIT EINER ANLAGE, DIE IN EINER LUFTZERLEGUNGSANLAGE INTEGRIERT IST
INSTALLATION PRODUCING LOW VOLTAGE ELECTRICITY INTEGRATED IN A UNIT SEPARATING GAS FROM AIR

(30) Priorité: 06.08.1998 FR 9810146
(43) Date de publication de la demande: 30.05.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: GUILLARD, Alain, F-75016 Paris (FR)
(74) Mandataire: Le Moenner, Gabriel
(86) Numéro de dépôt international: FR9901931
(87) Numéro de publication internationale: WO00008400

(56) Documents cités:
- EP-A- 0 824 951
- DE-A- 2 930 523
- FR-A- 2 712 383
- US-A- 3 950 957
- US-A- 5 329 776

## Description

La présente invention concerne une installation combinée et un procédé comprenant les caractéristiques selon le préambule de la revendication 1 et 9 respectivement.

Une telle installation et un tel procédé sont connus par le US-A-3 950 957.

Il est connu de EP-A-0 758 733 de détendre un produit d'une réaction chimique et d'utiliser l'énergie de détente pour surpresser un débit d'air destiné à un appareil de séparation d'air ou un débit d'azote provenant de l'appareil.

DE-A-3114842 décrit un cas où l'air destiné à un appareil de séparation d'air est comprimé en utilisant l'énergie générée par un cycle de Rankine.

US-A-3304074 décrit la détente du gaz de gueulard d'un haut fourneau dans une turbine couplée au compresseur principal d'un appareil de séparation d'air. Le procédé ne prévoit pas de production de liquide.

FR-A-2774159 divulgue un procédé dans lequel un surpresseur d'air est entraîné par une turbine dans laquelle se détend un fluide disponible sur le site (de la vapeur d'eau, un gaz résiduaire d'un four).

EP-A-0 282 321 dêcrit la génération d'électricité par détente d'un produit de combustion, une partie de l'électricité alimentant un appareil de séparation d'air ou un liquéfacteur.

"Engineering, Construction and Start-up of the ELCOGAS IGCG power plant at Puertollano" de Gasc et al., POWER-GEN EUROPE June 1997 et beaucoup d'autres articles divulguent une installation intégrée comprenant un appareil de séparation d'air, une unité de gazéification de charbon et une turbine à gaz dans laquelle un gaz de l'unité est envoyé à une unité de combustion et un gaz produit par la combustion est détendu dans une turbine à gaz couplée au compresseur commun de l'appareil de séparation d'air et la turbine à gaz. Ce système permet de générer de l'énergie qui est exportée en dehors de l'installation intégrée.

US 3950957 décrit un appareil de séparation d'air intégré à un appareil 'de production de vapeur. La turbine à vapeur entraîne le compresseur d'air mais ce couplage est insuffisant pour assurer tous les besoins énergétiques de l'appareil de séparation d'air. Il n'y a donc pas de production de liquide directement à partir de l'unité de séparation.

DE-A-2930523 décrit un appareil de séparation d'air intégré à un appareil de production de vapeur. Une des turbines à vapeur entraîne le compresseur d'air et l'autre un compresseur d'azote de l'appareil de séparation d'air. Il n'y a aucune production de liquide à partir de l'appareil de séparation d'air et l'azote comprimé n'est pas envoyé à l'appareil de production de vapeur.

Certaines réactions, telle que la combustion de déchets, permettent de produire de l'énergie en quantité parfois limitée par détente des gaz résiduaires ou par détente de vapeur d'eau, chauffée par une chaudière où les gaz résiduaires brûlent, ou par utilisation dans un moteur à gaz.

Afin d'optimiser la production d'énergie ou minimiser le volume de gaz. résiduaires à des fins écologiques, de l'oxygène est utilisé en grande quantité, ainsi que bien souvent de l'azote pour des besoins d'inertage.

L'énergie consommée pour la séparation des fluides de l'air et éventuellement la compression des gaz issus de l'appareil de séparation correspondant aux besoins de ce procédé peut être bien inférieure à l'énergie. produite par la ou les réactions et au bilan cette installation intégrée peut être génératrice d'énergie. Typiquement, 240 t/j de déchets avec 120 t/j d'oxygène donne environ 20 à 25 t/h de vapeur, ce qui développe au plus environ 5 MW, une partie de cette puissance étant consommée par la séparation d'air, à condition que la vapeur excédentaire disponible ne soit pas utilisée à d'autres fins; par exemple pour un chauffage urbain en périphérie de cette unité.

Le but de l'invention est. de réduire le coût d'investissement d'une installation intégrée en éliminant tout ou partiellement le coût du raccordement au réseau électrique, des moteurs et des générateurs moyenne tension ou haute tension (MT ou HT).

Un autre but de l'invention est d'améliorer le rendement énergétique global de l'installation en éliminant les transformateurs, les moteurs MT ou HT et les générateurs MT ou HT de l'art antérieur.

Un autre but de l'invention est d'utiliser plus intelligemment l'énergie produite par l'installation quand l'électricité générée ne peut être distribuée ou ne peut être distribuée sous des conditions économiques favorables.

Selon un objet de l'invention, il est prévu une installation selon la revendication 1.

Ainsi le dispositif n'est pas relié directement à un moyen de génération d'électricité moyenne ou haute tension ou à un moyen de consommation d'électricité moyenne ou haute tension.

Cependant l'électricité basse tension, nécessaire pour les pompes de fluides de refroidissement et autres accessoires, proviendra d'une source d'électricité moyenne ou haute tension par les moyens d'un transformateur.

La basse tension est une tension en dessous de 1000 V, la moyenne tension est entre 1000V et 15 KV et la haute tension est au-dessus de 15 KV.

De préférence l'appareil de séparation d'air et/ou l'unité et/ou les moyens de liquéfaction ne sont pas reliés directement à des moyens de génération ou de consommation d'électricité moyenne ou haute tension, une fois en marche. Ils peuvent être reliés en continu à un moyen de génération ou de consommation d'électricité basse tension. Pendant le démarrage de l'appareil de séparation d'air ou de l'unité ou des moyens de liquéfaction, ceux-ci pourraient être reliés à des moyens de génération et/ou de consommation d'électricité moyenne ou haute tension.

Comme la production d'énergie de l'unité pour le(s) dispositif(s) peut être excédentaire par rapport aux besoins de l'appareil de production de fluide de l'air, pour produire des gaz destinés à l'unité et/ou pour l'unité elle-même, cette énergie peut être valorisêe en produisant du liquide supplémentaire directement de l'appareil de séparation d'air ou des moyens de liquéfaction.

Le produit gazeux issu de l'appareil de séparation peut être de l'air ou un gaz enrichi en azote, en oxygène ou en argon.

Le dispositif peut entraîner en même temps que le compresseur d'air principal, un surpresseur d'air éventuellement intégré avec ce compresseur (c'est à dire sur le meme arbre que le compresseur).

Dans un deuxième dispositif une partie d'un gaz dérivé de l'unité permet de produire de l'énergie mécanique pour entraîner au moins un deuxième compresseur.

Le deuxième compresseur peut comprimer un gaz provenant d'un appareil de séparation d'air, ou un gaz de cycle pour la liquéfaction d'un gaz provenant de l'appareil de séparation.

Le deuxième dispositif est une turbine, une turbine à gaz ou un moteur à gaz.

L'installation peut comprendre au moins
a) des moyens pour envoyer de l'air comprimé d'un compresseur de l'appareil de séparation à l'unité et/ou
b) des moyens pour envoyer un débit d'oxygène gazeux de l'appareil de séparation à l'unité et/ou
c) des moyens pour envoyer de l'oxygène liquide de l'appareil -de séparation à l'unité et/ou
d) des moyens pour envoyer de l'azote liquide des moyens de liquéfaction ou de l'appareil de séparation à l'unité et/ou
e) des moyens pour envoyer de l'azote gazeux de l'appareil de séparation à l'unité et/ou
f) des moyens pour envoyer de l'argon gazeux ou liquide de l'appareil de séparation à l'unité.

Toute l'énergie, non consommée par l'unité ou par d'autres appareils associés à l'unité (tel que l'appareil de séparation d'air) générée par le (les) dispositif(s) peut servir à entraîner un (des) compresseur(s) de l'appareil de distillation d'air.

Toute l'énergie de compression des gaz de l'appareil de distillation d'air (air d'alimentation ou produits gazeux ou cycle) peut être fournie par le (les) dispositif(s) de l'installation.

Le compresseur principal peut être un compresseur dédié n'alimentant que l'appareil de séparation d'air ou peut alimenter au moins un appareil autre que l'appareil de séparation d'air.

Eventuellement l'appareil de séparation d'air produit au moins un gaz ou au moins un liquide non destiné à l'unité et/ou aux moyens de liquéfaction.

Le fluide de l'air peut participer ou non à la réaction qui s'effectue dans l'unité.

Les moyens de liquéfaction sont des moyens de liquéfier un gaz provenant de l'appareil de séparation d'air. Ils comprennent un cycle de liquéfaction avec au moins une turbine de production de froid qui détend le gaz sous pression à liquéfier ou une autre source de frigories, telle qu'un débit de LNG à vaporiser.

Selon un autre aspect de l'invention, il est prévu un procédé intégré de selon la revendication 9.

Le produit gazeux issu de l'appareil de séparation peut être de l'azote ou un gaz enrichi en azote, en oxygène ou en argon.

Préférablement
a) on envoie de l'air comprimé d'un compresseur de l'appareil de séparation à l'unité et/ou
b) on envoie un débit d'oxygène gazeux, éventuellement comprimé, de l'appareil de séparation à l'unité et/ou
c) on envoie un débit d'oxygène liquide éventuellement pressurisé de l'appareil de séparation à l'unité et/ou
d) on envoie de l'azote liquide, éventuellement pressurisé, des moyens de liquéfaction et/ou de l'appareil de séparation à l'unité et/ou
e) on envoie de l'azote gazeux éventuellement comprimé de l'appareil de séparation à l'unité et/ou
f) on envoie de l'argon gazeux ou liquide éventuellement pressurisé de l'appareil de séparation à l'unité.

L'appareil de production de gaz de l'air comprend un appareil de séparation d'air et éventuellement des moyens de liquéfaction d'un gaz provenant de l'appareil de séparation.

l'appareil de séparation peut être constitué par un compresseur principal d'air, un échangeur de chaleur, au moins une turbine de détente de fluide de l'air et au moins une double colonne de distillation d'air.

Un deuxième dispositif qui produit de l'énergie mécanique peut entraîner un deuxième compresseur.

Le deuxième compresseur peut comprimer de l'air -destiné à un appareil de séparation d'air ou un gaz provenant d'un appareil de séparation d'air ou un gaz de cycle pour liquéfaction d'un gaz provenant de l'appareil de séparation ou un gaz issu de ou destiné à l'unité.

Le compresseur principal peut être un compresseur dédié n'alimentant que l'appareil de séparation d'air ou peut alimenter au moins un appareil autre que l'appareil de séparation d'air.

Eventuellement l'appareil de séparation d'air produit au moins un gaz non destiné à l'unité et aux moyens de liquéfaction d'un gaz.

Il sera compris qu'un dispositif qui produit de l'énergie mécanique peut entraîner un ou plusieurs compresseurs de l'installation.

L'unité et/ou l'appareil de séparation et/ou les moyens de liquéfaction peut (peuvent) ne consommer et/ou ne générer que de l'électricité basse tension. Cette électricité basse tension proviendra de ou sera envoyé à une source d'électricité moyenne ou haute tension.

De cette façon un appareil de production de fluide de l'air peut fonctionner sans apport direct d'énergie électrique moyenne ou haute tension de l'extérieur; ceci permet de limiter de façon notable les coûts. Il peut en être de même pour l'unité consommatrice d'un fluide de l'air ou les moyens de liquéfaction. Il y aura évidemment un apport indirect d'énergie électrique moyenne ou haute tension aux transformateurs fournissant l'électricité basse tesion à l'appareil ou à certains éléments de l'appareil.

Un fluide de l'air est soit de l'air gazeux ou liquide, soit un gaz ou un liquide dérivé de l'air par distillation ou autre moyen de séparation.

Un exemoie de mise en oeuvre de l'invention sera maintenant décrit avec plus de détail en regard à la Figure qui illustre une installation selon l'invention avec un appareil de production de gaz et de liquide de l'air P intégré avec une unité de combustion de déchets 2 alimentée par de l'air, de l'oxygène gazeux, de l'azote gazeux, l'oxygène liquide et de l'azote liquide provenant de l'appareil de séparation d'air cryogénique 41 et les moyens de liquéfaction 3.

Un débit d'air est comprimé dans le compresseur principal 44 de l'appareil de séparation de gaz de l'air, ce compresseur étant entraîné par une turbine 40 et n'étant relié ni à un moyen de génération d'électricité moyenne ou haute tension ni à un moyen de consommation d'électricité moyenne ou haute tension dans sa phase de marche normale (hors démarrage éventuellement). Il est néanmoins relié à des moyens de génération d'électricité basse tension qui, eux, sont reliés aux moyens de génération moyenne et/ou haute tension.

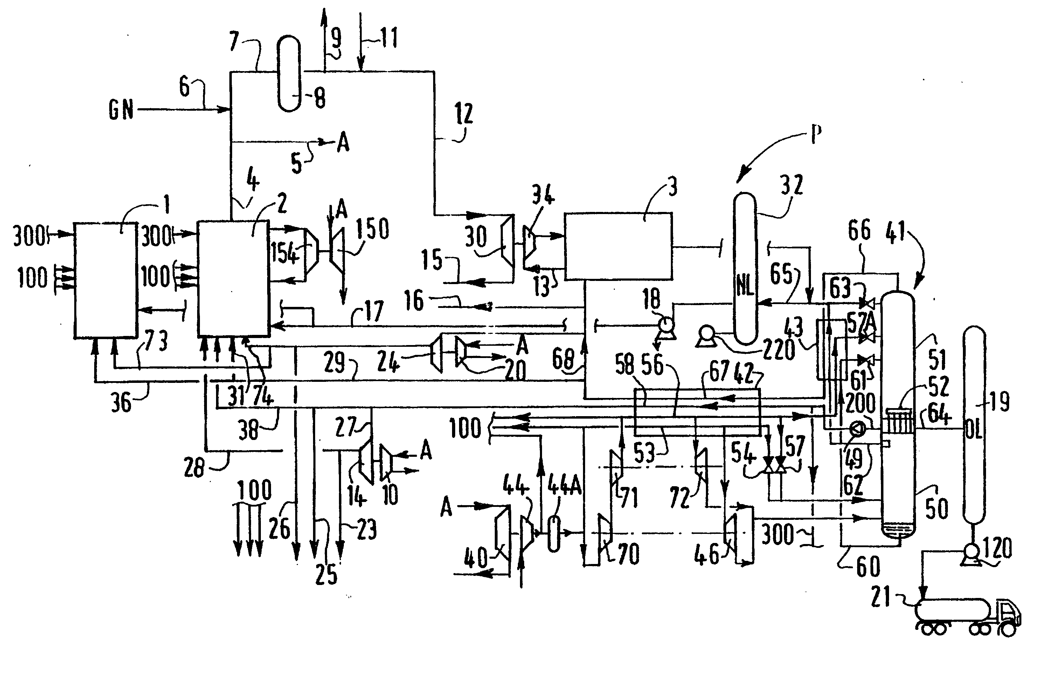

L'appareil de distillation d'air 41 représentée à la figure 1 comprend essentiellement : un compresseur d'air 44, un appareil 44A d'épuration de l'air comprimé en eau et en CO₂ par adsorption, cet appareil comprenant deux bouteilles d'adsorption dont l'une fonctionne en adsorption pendant que l'autre est en cours de régénération : deux ensembles turbine-surpresseur comprenant une première turbine de détente 46 et un premier surpresseur 70 et une deuxième turbine de détente 72 et un surpresseur 71 dont les arbres sont couplés; un échangeur de chaleur 42 constituant la ligne d'échange thermique de l'installation et une double colonne de distillation comprenant une colonne moyenne pression 50 surmontée d'une colonne basse pression 51, avec un vaporiseur condenseur 52 mettant la vapeur de tête (azote) de la colonne 50 en relation d'échange thermique avec le liquide de cuve (oxygène) de la colonne 51.

Cette installation est destinée à fournir, via une conduite 58, de l'oxygène gazeux sous une haute pression prédéterminée, qui peut être comprise entre quelques bars et quelques dizaines de bars (dans le présent mémoire, les pressions considérées sont des pressions absolues).

Pcur cela, de l'oxygène liquide soutiré de la cuve de la colonne 51 est amené à la haute pression par la pompe 49 à l'état liquide, puis vaporisé et réchauffé sous cette haute pression dans des passages 58 de l'échangeur 42.

La chaleur nécessaire à cette vaporisation et à ce réchauffage, ainsi qu'au réchauffage et éventuellement à la vaporisation d'autres fluides soutirés de la double colonne, est fournie par l'air à distiller, dans les conditions suivantes:

Le compresseur d'air 44 de l'installation comprime directement la totalité de l'air à la première haute pression de l'ordre de 23-bars et un premier courant de cet air est traité comme précédemment dans les passages 53 la turbine 46 et la vanne de détente 54 puis envoyé à la base de la colonne 50.

En revanche, le reste de cet air est surpressé en deux étapes, par deux soufflantes montées en série : une première soufflante 70 qui est couplée directement à la turbine 46 et une deuxième soufflante 71 directement couplée à une deuxième turbine de détente 72. L'air surpressé en 70 passe en totalité dans la soufflante 71 puis dans les passages 56 de la ligne d'échange 42 et une partie de cet air est sorti de la ligne d'échange à une température T2 supérieure à la température T1 pour être détendu dans la turbine 72. L'échappement de cette dernière à la moyenne pression est relié à la base de la colonne 50 comme celui de la turbine 46.

L'air à la plus haute pression non détendu dans la turbine 72 poursuit son refroidissement et est liquéfié dans les passages 56 jusqu'au bout froid de la ligne d'échange puis est détendu dans des vannes de détente 57 et 57A et réparti entre les deux colonnes 50 et 51.

On reconnaît par ailleurs sur la figure 1 les conduites habituelles des installations à double colonne. Les conduites 60, 62 d'injection dans la colonne 51 à des niveaux croissants de "liquide riche" (air enrichi en oxygène) détendu et de "liquide pauvre" (azote pratiquement pur) détendu, respectivement, ces fluides étant respectivement soutirés à la base, au sommet de la colonne 50, et les conduites 66 d'évacuation du gaz résiduaire (azote impur) partant du niveau d'injection du liquide pauvre. L'azote basse pression est réchauffé dans des passages 37 de l'échangeur 42. Un sous refroidisseur 43 sert à refroidir les débits de liquide riche et pauvre 60,49 envoyé à la. colonne basse pression à travers les vannes de détente 61,63 ainsi que l'air à détendre dans la vanne de détente 52A.

De l'oxygène liquide est stocké dans le stockage 19, ensuite pressurisé par la pompe 120 et envoyé au camion-citerne 21.

De l'azote liquide est stocké dans le stockage 32, ensuite pressurisé par la pompe 220 et envoyé au camion-citerne.

De l'azote basse pression est envoyé au liquéfacteur 3 où il est liquéfié à l'aide d'un cycle de réfrigération utilisant un compresseur 34 pour former de l'azote liquide.

La double colonne peut évidemment être associée à une colonne Etienne, une colonne de mélange ou une colonne argon entre autres ou peut être remplacée par une simple colonne.

Deux débits d'azote gazeux 36, 73 sont envoyés au stockage de déchets 1 et deux autres débit d'azote gazeux 31, 74 sont envoyés à l'unité 2 de traitement de déchets:

Les débits 73, 74 ont été comprimés par le compresseur 24 depuis la pression de la colonne 51 à une pression plus élevée. Ce compresseur n'est relié directement ni à un moyen de génération d'électricité moyenne ou haute tension ni à un moyen de consommation d'électricité moyenne ou haute tension. Il est entraîné par la turbine de gaz de synthèse 20 et relié à des moyens de génération d'électricité basse tension, qui; eux, peuvent être reliés à des moyens de génération et/ou de consommation moyenne ou haute tension.

Un débit d'azote liquide 17 provenant indirectement de l'appareil de séparation 41 et des liquéfacteurs 3 est envoyé du stockage 32 après pressurisation en 18 au stockage 1 et à l'unité 2.

Un débit d'oxygène gazeux 58 est divisé en deux; une partie 38 est envoyée directement à l'unité 2 et le reste 27 est comprimé par le compresseur 14 et une partis 28 de ce débit comprimé est envoyé à l'unité 2. Un débit d'oxygène liquide 300 est envoyé à l'unité 2.

Un débit d'oxygène liquide 300 ainsi que deux débits d'air à pressions différentes 100 provenant du compresseur 44, des surpresseurs 70, 71 et de la conduite 56 sont envoyés au stockage 1 et à l'unité 2 pour la combustion des déchets.

D'autres débits gazeux 100 comprenant des débits d'air à pressions différentes, de l'oxygène et de l'azote 23. 25, 26 sont produits pour d'autres applications.

L'unité 2 produit un gaz de synthèse 4 qui alimente en A une ou plusieurs turbines. Cette unité n'est reliée ni à un. moyen de génération d'électricité moyenne ou haute tension ni à un moyen de consommation d'électricité moyenne ou haute tension. Elle peut éventuellement être reliée à ces moyens uniquement en phase de démarrage. Elle doit cependant être reliée en continu à des moyens de génération et/ou de consommation basse tension qui, eux , sont reliés à des moyens de génération et/ou de consommation moyenne et/ou haute tension.

Le stockage des déchets 1 est alimenté en azote gazeux basse pression 29,36et/ouen azote gazeux 73 comprimé par le compresseur 24et/ou en air comprimé 100 et/ou en oxygène gazeuxet/ouen oxygène liquide 300 et/ou en azote liquide 17 sous pression du stockage 32 alimenté par les moyens de liquéfaction 3 et la ligne 62, 65 de l'appareil de séparation d'air.

Dans l'exemple, une partie 5 du gaz de synthèse entraîne les turbines 10, 20. La deuxième turbine 30 qui entraine le compresseur 34 du gaz de cycle 13 du liquéfacteur 3 peut aussi détendre une fraction du gaz de synthèse 5. Tout ou une partie du gaz de synthèse peut être détendu dans une ou plusieurs des turbines 10, 20, 30, 150. La chaleur résiduelle d'un gaz 15 détendu dans une des turbines peut préchauffer le gaz à détendre dans l'autre turbine ou un autre gaz à détendre.

Une partie du gaz de synthèse est détendu dans la turbine 10 qui entraîne le compresseur 14 d'oxygène basse pression. 27 chauffé dans les passages 58 de l'échangeur 42 après pressurisation. Ce compresseur n'est relié directement ni à un moyen de génération d'électricité moyenne ou haute tension ni à un moyen de consommation d'électricité moyenne ou haute tension. Il est néanmoins relié à des moyens de génération et/ou de consommation d'électricité basse tension qui, eux, peuvent etre reliés à des moyens génération et/ou de consommation moyenne ou haute tension. L'oxygène comprimé 28 est envoyé à l'unité 2.

Comme l'énergie nécessaire à la séparation de l'air et à la production des gaz sous pression consommée par l'unité est bien inférieure à celle transmise par la ou les turbine(s), le surplus d'énergie est utilisé pour produire des liquides cryogéniques et/ou des gaz sous pression pour des applications autre que l'unité 2. L'appareil de séparation d'air génère donc du liquide 200, 64, 65 supplémentaire.

Le gaz de synthèse A entraîne une turbine ou moteur 150 couplé au compresseur 154 d'un gaz issu de l'unité. Ce compresseur n'est pas relié directement à des moyens de génération/consommation MT/HT. Or il est relié directement à des moyens de génération et/ou de consommation d'électricité basse tension qui, eux, peuvent être reliés à des moyens génération et/ou de consommation moyenne ou haute tension.

Toutefois si l'énergie transmise par les turbines 10, 20, 30 ou 150 ou une de ces turbines ne suffit pas, dû à la grande production de liquide, une alimentation en électricité moyenne et/ou haute tension peut être prévue pour plusieurs ou tous les compresseurs 14, 24, 34, 154.

Suivant l'énergie résiduelle, le liquéfacteur 3 peut être totalement arrêté et l'oxygène et/ou azote liquide peut être produit en totalité avec l'unité de séparation d'air utilisant un des procédés de US-A-5329776.

Le liquide supplémentaire produit par l'appareil de séparation d'air peut être vaporisé à l'intérieur de celui-ci à contre-courant d'un gaz calorigène pour fournir du gaz. Dans ce cas, il peut ne pas y avoir de produit liquide qui sort de l'installation sous forme liquide.

Le gaz dérivé de l'unité qui entraîne la turbine ou les turbines peut être de la vapeur 12 générée par une chaudière 8 associée à l'unité 2. Comme montré, le gaz de synthèse 4 mélangé 7 (ou pas) avec le gaz naturel 6 peut être envoyé à une chaudière 8 pour y générer de la vapeur d'eau 12. Cette ,vapeur est dérivée indirectement de l'unité 2.

De la vapeur 11 d'une source extérieure peut être rajoutée au débit provenant de la chaudière 8. De même, de la vapeur 9 de la chaudière peut être exportée.

Dans ce cas, la vapeur 12 se détend dans la turbine 30 qui entraîné le compresseur de cycle 34 des moyens de liquéfaction d'azote 3. Tout ou une partie de la vapeur peut être détendu de cette manière. Ce compresseur n'est relié directement ni à un moyen de génération d'électricité moyenne ou haute tension ni à un moyen de consommation d'électricité moyenne ou haute tension. Il est néanmoins relié à des moyens de génération et/ou de consommation d'électricité basse pression qui, eux, peuvent être reliés à des moyens de génération et/ou de consommation moyenne ou haute tension.

Evidemment le gaz de synthèse peut entraîner la turbine 30 reliée au compresseur 34.

La vapeur entraîne la turbine 40 peut également entraîner une des turbines 10, 20, 150 avec ou sans la turbine 30.

Eventuellement de la vapeur peut servir à préchauffer l'azote impur 66 qui régénère les lits d'adsorbants qui épurent l'air ou être utilisé dans les groupes frigorifiques à adsorption.

Dans le cas de la turbine 40, on voit que le compresseur d'air principal 44 et le surpresseur 70 sont entraînés par les turbines 40,46 respectivement. Selon l'invention, le compresseur et surpresseur sont entraînés par la turbine 40.

De préférence, l'appareil de production de fluide de l'air est un appareil de séparation d'air par distillation cryogénique comprenant une simple colonne ou une double colonne.

Si l'unité est petite, la séparation de l'air peut être effectuée par un autre moyen que la cryogénie (perméation, adsorption).

La vapeur peut être envoyée dans un dispositif autre qu'une turbine de détente pour fournir de l'énergie mécanique au(x) compresseur(s).

La vapeur peut fournir de l'énergie mécanique au compresseur principal d'air et/ou à un compresseur de produit de l'appareil de séparation 41 et/ou au compresseur de cycle des moyens de liquéfaction.

L'installation peut comprendre des dispositifs de production d'énergie mécanique alimentés par de la vapeur et/ou du gaz de synthèse.

L'installation peut comprendre un appareil de production constitué par un appareil de séparation d'air qui n'alimente pas l'unité et un liquéfacteur qui alimente l'unité en liquide.

Sous sa forme la plus simple, l'installation peut rie comprendre que l'unité 2, l'appareil de séparation 41 (comprenant par exemple un compresseur d'air principal, une seule turbine Claude qui détend de l'air partiellement refroidi, un échangeur de chaleur, une double colonne, une pompe d'oxygène liquide pour l'oxygène provenant de la colonne basse pression, des moyens pour vaporiser l'oxygène liquide dans l'échangeur, des moyens pour envoyer de l'air condensé à la double colonne et d'autres conduites), les moyens pour envoyer un gaz de l'appareil de séparation à l'unité et une turbine pour détendre de la vapeur de l'unité qui entraîne le compresseur principal d'air.

L'appareil de séparation peut comprendre plusieurs turbines (de fluide de l'air).

L'appareil de séparation peut comprendre des stockages; sinon tout le liquide produit peut être vaporisé dans l'échangeur.

Le compresseur principal d'air 44 peut ne pas avoir de connections MT ou HT. Il est relié à une source d'électricité basse tension et/ou à un consommateur d'électricité basse tension qui, elle (lui), peut être reliée à des moyens de génération et/ou de consommation moyenne ou haute tension.

Dans une autre variante de cette forme la plus simple, le compresseur principal d'air est entraîné par la vapeur dérivée de l'unité.

L'unité peut être, par exemple, une unité de production d'oxyde d'éthylène, de chlorure de vinyle, d'oxyde de titane, d'acide nitrique ou d'acide sulfurique, de méthanol ou d'ammoniac ou toute autre unité chimique ou métallurgique produisant de l'énergie excédentaire.

Il est clair que l'invention pourrait s'appliquer à des appareils de séparation de mélange gazeux autres que des appareils de séparation d'air, tels que des appareils de séparation par distillation cryogénique de mélanges contenant au moins 1% de hydrogène, azote, monoxyde de carbone et/ou méthane.

Dans ce cas, un fluide de l'appareil de séparation est envoyé à l'unité et un dispositif entraîné par un gaz dérivé de l'unité entraîne un compresseur. Ce compresseur peut être le compresseur principal de l'appareil, un compresseur de produit de l'appareil ou un compresseur de l'unité.

Selon les cas, seuls certains éléments de l'installation peuvent être reliés aux moyens de génération ou de consommation d'électricité moyenne ou haute tension uniquement à travers les moyens de génération ou consommation basse tension, tandis que d'autres éléments peuvent être reliés directement aux moyens de génération ou de consommation d'électricité moyenne ou haute tension.

## Revendications

1. Installation combinée comprenant : au moins une unité (2), consommatrice d'un fluide de l'air, dans laquelle se produit au moins une réaction, au moins un appareil (P) de production de fluide de l'air comprenant un appareil de séparation d'air (41) ayant un compresseur principal d'air (44) et au moins un surppresseur (70) d'air des moyens (17, 31, 74, 100) pour envoyer au moins un fluide de l'air de l'appareil de production à l'unité; et au moins un dispositif (10, 20, 30, 40) avec lequel au moins une partie de vapeur d'eau dérivée de l'unité permet de produire de l'énergie mécanique,
i) un/le dispositif (40) entraîne au moins le compresseur d'air principal (44) et au moins un surpresseur (70) d'air, l'appareil de production comprend des moyens pour produire une composante de l'air sous forme liquide, comprenant au moins des moyens (64,65) de soutirage de liquide d'un appareil de séparation et au moins le compresseur entraîné et le dispositif entraînant le compresseur sont reliés, au niveau électrique, uniquement à des moyens de génération d'éleciricité basse tension et/ou uniquement à des moyens de consommation d'électricité basse tension et sont reliés à des moyens de génération et consommation d'électricité moyenne et/ou haute tension uniquement à travers des moyens de génération d'électricité basse tension et/ou des moyens de consommation d'électricité basse tension, et éventuellement
ii) un/le dispositif entraîne au moins un compresseur de cycle (34) de moyens de liquéfaction (3) d'un gaz provenant de l'appareil de séparation d'air (41) et éventuellement
iii) un/le dispositif entraine au moins un compresseur (24,154) d'un gaz issu de ou destiné à l'unité,
**caractérisé en ce que** le compresseur d'air principal et le surpresseur sont entraînés par un seul de ces dispositifs.

2. Installation selon la revendication 1 comprenant au moins un autre dispositif (10, 20, 30, 40, 150) avec lequel une partie (5, 12) de la vapeur d'eau dérivée de l'unité permet de produire de l'énergie mécanique et qui entraîne au moins un deuxième compresseur (14, 24, 34, 44, 154).

3. Installation selon la revendication 2 dans laquelle le deuxième compresseur (14, 24, 34, 44, 154) comprime un gaz provenant d'un appareil de séparation d'air ou un gaz de cycle des moyens (3) de liquéfaction d'un gaz provenant de l'appareil de séparation ou un gaz issu de ou destiné à l'unité (2).

4. Installation selon une des revendications précédentes dans laquelle les moyens pour envoyer un fluide de l'air de l'appareil de production (P) à l'unité (2) comprennent au moins :
a) des moyens (100) pour envoyer de l'air comprimé d'un compresseur (44, 70, 71) de l'appareil de séparation (41) à l'unité (2) et/ou
b) des moyens (28, 38) pour envoyer un débit d'oxygène gazeux de l'appareil de séparation à l'unité et/ou
c) des moyens (300) pour envoyer de l'oxygène liquide de l'appareil de séparation à l'unité et/ou
d) des moyens (17) pour envoyer de l'azote liquide des moyens de liquéfaction (3) ou de l'appareil de séparation (41) à l'unité et/ou
e) des moyens (31, 74) pour envoyer de l'azote gazeux de l'appareil de séparation à l'unité et/ou
f) des moyens pour envoyer de l'argon gazeux ou liquide de l'appareil de séparation à l'unité.

5. Installation selon une des revendications précédentes dans laquelle toute l'énergie non-consommée par l'unité (2) ou par d'autres appareils associés à l'unité, générée par le (les) dispositif(s) (10, 20, 30, 40, 150) sert à entraîner un (des) compresseur(s) de l'appareil de production d'air (P) et/ou les moyens de liquéfaction.

6. Installation selon une, des revendications précédentes dans laquelle tout ou partie de l'énergie de compression de gaz de l'appareil de séparation d'air est fournie par le (les) dispositifs) (10, 20, 30, 40, 150) de l'installation.

7. Installation selon l'une des revendications précédentes dans laquelle le compresseur principal (44) est un compresseur dédié n'alimentant que l'appareil de séparation d'air.

8. Installation selon l'une des revendications 1 à 6 dans laquelle le compresseur d'air principal (44) alimente au moins un appareil autre que l'appareil de séparation d'air.

9. Installation selon une des revendications précédentes dans laquelle l'appareil de séparation d'air produit au moins un gaz (23, 25, 26, 100) et/ou au moins un liquide non destiné à l'unité et/ou aux moyens de liquéfaction (3).

10. Installation selon l'une des revendications précédentes dans laquelle l'unité (2) et/ou l'appareil de séparation et/ou les moyens de liquéfaction sont reliés uniquement à des moyens de consommation d'électricité basse tension et/ou des moyens de génération d'électricité basse tension et sont reliés à des moyens de génération et consommation d'électricité moyenne et haute tension uniquement à travers des moyens de génération d'électricité basse tension et/ou des moyens de consommation d'électricité basse tension.

11. Installation selon une des revendications précédentes selon laquelle comprenant des moyens pour extraire une composante de l'air sous forme liquide d'une colonne de séparation (41).

12. Installation selon l'une des revendications 1 à 11 dans laquelle au moins un des fluides de l'air participe à la réaction qui s'effectue dans l'unité (2).

13. Procédé intégré de production de gaz de l'air sous forme gazeuse ou liquide et d'au moins une réaction dans lequel un fluide de l'air généré par un appareil de production de fluide de l'air (P) comprenant un appareil de séparation d'air (41) ayant un compresseur d'air principal (44) est envoyé à une unité (2), consommatrice d'un fluide de l'air, dans lequel s'effectue une réaction, de la vapeur dérivée de la réaction produit de l'énergie mécanique à l'aide d'un dispositif (10, 20, 30, 40, 150) et
i) un/le dispositif (40) entraîne au moins le compresseur d'air principal (44) de l'appareil de séparation d'air et au moins un surpresseur (70) d'air, l'appareil de séparation d'air (41) produit au moins une composante de l'air sous forme liquide en soutirant un liquide de l'appareil de séparation d'air et au moins le dispositif et le compresseur entraîné (14,44) ne consomment et/ou ne génèrent que de l'électricité basse tension, cette électricité basse tension provenant de ou destiné à une source d'électricité moyenne et/ou haute tension, et éventuellement
ii) un/le dispositif (30) entraîne au moins un compresseur de cycle (34) de moyens de liquéfier (3) un gaz provenant de l'appareil de séparation d'air et éventuellement
iii) un/le dispositif (20,150) entraîne au moins un compresseur de gaz (24,154) destiné à ou issu de l'unité (2),
**caractérisé en ce que** le compresseur d'air principal et le surpresseur sont entraînés par un seul de ces dispositifs (40).

14. Procédé selon la revendication 13 dans lequel une partie de la vapeur d'eau dérivée de l'unité produit de l'énergie mécanique dans un deuxième dispositif (10, 20, 30, 40, 150) qui entraîne au moins un deuxième compresseur (14, 24, 34, 44, 154).

15. Procédé selon la revendication 14 dans lequel le deuxième compresseur (14, 24, 34, 44) comprime un gaz provenant de l'appareil de séparation d'air ou un gaz de cycle de moyens de liquéfaction d'un gaz provenant de l'appareil de séparation ou un gaz issu ou provenant de l'unité (2).

16. Procédé selon une des revendications 13 à 15 dans lequel
a) on envoie (100) de l'air comprimé d'un compresseur (44, 70, 71) de l'appareil de séparation (41) à l'unité (2) et/ou
b) on envoie un débit d'oxygène gazeux (23, 38) éventuellement comprimé de l'appareil de séparation à l'unité et/ou
c) on envoie un débit d'oxygène liquide (300), éventuellement pressurisé de l'appareil de séparation à l'unité et/ou
d) on envoie de l'azote liquide (17) éventuellement pressurisé des moyens de liquéfaction (3) ou de l'appareil de séparation (41) à l'unité et/ou
e) on envoie de l'azote gazeux (31, 74) éventuellement comprimé de l'appareil de séparation à l'unité et/ou
f) on envoie de l'argon gazeux ou éventuellement comprimé ou pressurisé de l'appareil de séparation à l'unité.

17. Procédé selon une des revendications 13 à 16 dans lequel toute l'énergie non-consommée par l'unité (2) générée par le (les) dispositif(s) (10, 20, 30, 40, 150) sert à entraîner au moins un (des) compresseur(s) de l'appareil de distillation d'air et/ou les moyens de liquéfaction (3).

18. Procédé selon une des revendications 13 à 17 dans lequel toute l'énergie de compression de gaz de l'appareil de distillation d'air est fournie par le (les) dispositifs) de l'installation.

19. Procédé selon l'une des revendications 13 à 18 dans lequel le compresseur d'air principal (44) est un compresseur dédié n'alimentant que l'appareil de séparation d'air.

20. Procédé selon l'une des revendications 13 à 18 dans lequel le compresseur principal (44) alimente au moins un appareil (1, 2) autre que l'appareil de séparation d'air.

21. Procédé selon une des revendications 13 à 20 dans lequel l'appareil de séparation d'air (41) produit au moins un fluide (23, 25, 26, 100) non destiné à l'unité et aux moyens de liquéfaction.

22. Procédé selon une des revendications 13 à 21 dans lequel l'unité (2) et/ou l'appareil de séparation et/ou les moyens de liquéfaction ne consomme(nt) que de l'électricité basse tension et/ou ne génère(nt) que de l'électricité basse tension, cette électricité basse tension provenant de ou destinée à une source d'électricité moyenne ou haute tension,

23. Procédé selon une des revendications 13 à 22 dans lequel au moins un fluide de l'air provenant de l'appareil de production participe à la réaction qui s'effectue dans l'unité (2).

24. Procédé selon une des revendications 13 à 23 dans lequel on soutire une composante de l'air sous forme liquide d'une colonne de l'appareil de séparation éventuellement en tant que produit liquide.

25. Procédé selon une des revendications 13 à 24 dans lequel l'unité et/ou l'appareil de séparation et/ou les moyens de liquéfaction consomment et/ou génèrent directement de l'électricité moyenne ou haute tension exclusivement pendant la phase de démarrage de l'unité et/ou de l'appareil et/ou des moyens de liquéfaction.

26. Procédé selon l'une des revendications 13 à 25 dans lequel au moins un dispositif et/ou au moins un compresseur entraîné (14, 24, 34, 44, 154) consomme(nt) et/ou génère(nt) directement de l'électricité moyenne ou haute tension exclusivement pendant la phase de démarrage de celui (ceux)-ci.

27. Procedé seion l'une des revendications 13 à 26 dans lequel au moins un compresseur (14, 24, 34, 44, 154) de l'installation et/ou l'unité et/ou l'appareil de production et/ou les moyens de liquéfaction consomme et/ou génère directement de l'électricité moyenne tension en continu.

28. Procédé intégré de production de gaz ou de liquide selon l'une des revendications 13 à 27 dans lequel l'appareil de production de fluide de l'air comprenant un appareil de séparation d'air principal est remplacé par un appareil de production d'hydrogène, d'azote, de monoxyde de carbone ou de méthane à partir d'un mélange comprenant au moins 1% d'au moins deux de ces composantes, ayant un compresseur principal du mélange et dans lequel un gaz ou un liquide de l'appareil de production d'hydrogène, d'azote, de monoxyde de carbone ou de méthane est envoyé à l'unité, consommatrice du gaz ou du liquide.

## Patentansprüche

1. Kombinierte Anlage, umfassend: mindestens eine Einheit (2), die ein Fluid der Luft verbraucht und in der mindestens eine Reaktion stattfindet, mindestens ein Gerät (P) zur Erzeugung eines Fluids der Luft, umfassend eine Luftzerlegungsanlage (41) mit einem Hauptluftverdichter (44) und mindestens einem Luftüberdruckerzeuger (70), Mittel (17, 31, 74, 100), um mindestens ein Fluid der Luft von dem Erzeugungsgerät zur Einheit zu befördern, und mindestens eine Vorrichtung (10, 20, 30, 40), mit der es mindestens ein Teil des von der Einheit abgeleiteten Wasserdampfes ermöglicht, mechanische Energie zu erzeugen, wobei
i) eine/die Vorrichtung (40) mindestens den Hauptluftverdichter (44) und mindestens einen Luftüberdruckerzeuger (70) antreibt, das Erzeugungsgerät Mittel umfasst, um eine Komponente der Luft in flüssiger Form zu erzeugen, umfassend mindestens Mittel (64, 65) zum Abziehen von Flüssigkeit aus einer Zerlegungsanlage, und mindestens der angetriebene Verdichter und die den Verdichter antreibende Vorrichtung auf elektrischer Ebene nur mit Mitteln zur Erzeugung von Niederspannungs strom und/oder Mitteln zum Verbrauch von Niederspannungsstrom verbunden sind und mit Mitteln zur Erzeugung und zum Verbrauch von Mittelund/oder Hochspannungsstrom nur über Mittel zur Erzeugung von Niederspannungsstrom und/oder Mittel zum Verbrauch von Niederspannungsstrom verbunden sind, und gegebenenfalls
ii) eine/die Vorrichtung mindestens einen Zyklusverdichter (34) von Mitteln (3) zur Verflüssigung eines Gases, das von der Luftzerlegungsanlage (41) kommt, antreibt, und gegebenenfalls
iii) eine/die Vorrichtung mindestens einen Verdichter (24, 154) eines Gases, das von der Einheit kommt oder für diese bestimmt ist, antreibt,
**dadurch gekennzeichnet, dass** der Hauptluftverdichter und der Überdruckerzeuger nur von einer dieser Vorrichtungen angetrieben werden.

2. Anlage nach Anspruch 1, umfassend mindestens eine weitere Vorrichtung (10, 20, 30, 40, 150), mit der es ein Teil (5, 12) des von der Einheit abgeleiteten Wasserdampfes ermöglicht, mechanische Energie zu erzeugen, und die mindestens einen zweiten Verdichter (14, 24, 34, 44, 154) antreibt.

3. Anlage nach Anspruch 2, bei der der zweite Verdichter (14, 24, 34, 44, 154) ein Gas, das von einer Luftzerlegungsanlage kommt, oder ein Zyklusgas der Mittel (3) zur Verflüssigung eines Gases, das von der Luftzerlegungsanlage kommt, oder ein Gas, das von der Einheit (2) kommt oder für diese bestimmt ist, verdichtet.

4. Anlage nach einem der vorhergehenden Ansprüche, bei der die Mittel zum Befördern eines Fluids der Luft von dem Erzeugungsgerät (P) zu der Einheit (2) mindestens Folgendes umfassen:
a) Mittel (100), um Druckluft von einem Verdichter (44, 70, 71) von der Zerlegungsanlage (41) zu der Einheit (2) zu befördern, und/oder
b) Mittel (28, 38), um einen gasförmigen Sauerstoffdurchsatz von der Zerlegungsanlage zu der Einheit zu befördern, und/oder
c) Mittel (300), um Flüssigsauerstoff von der Zerlegungsanlage zu der Einheit zu befördern, und/oder
d) Mittel (17), um flüssigen Stickstoff von den Verflüssigungsmitteln (3) oder der Zerlegungsanlage (41) zu der Einheit zu befördern, und/oder
e) Mittel (31, 74), um gasförmigen Stickstoff von der Zerlegungsanlage zu der Einheit zu befördern, und/oder
f) Mittel, um gasförmiges oder flüssiges Argon von der Zerlegungsanlage zu der Einheit zu befördern.

5. Anlage nach einem der vorhergehenden Ansprüche, bei der die gesamte nicht von der Einheit (2) oder anderen mit der Einheit verbundenen Geräten verbrauchte und von der (den) Vorrichtung(en) (10, 20, 30, 40, 150) erzeugte Energie dazu dient, einen (die) Verdichter des Lufterzeugungsgeräts (P) und/oder die Verflüssigungsmittel anzutreiben.

6. Anlage nach einem der vorhergehenden Ansprüche, bei der die gesamte oder ein Teil der Gasverdichtungsenergie der Luftzerlegungsanlage von der (den) Vorrichtung(en) (10, 20, 30, 40, 150) der Anlage geliefert wird.

7. Anlage nach einem der vorhergehenden Ansprüche, bei der der Hauptverdichter (44) ein Verdichter ist, der nur für die Versorgung der Luftzerlegungsanlage bestimmt ist.

8. Anlage nach einem der Ansprüche 1 bis 6, bei der der Hauptluftverdichter (44) mindestens ein Gerät, bei dem es sich nicht um die Luftzerlegungsanlage handelt, versorgt.

9. Anlage nach einem der vorhergehenden Ansprüche, bei der die Luftzerlegungsanlage mindestens ein Gas (23, 25, 26, 100) und/oder mindestens eine Flüssigkeit erzeugt, die nicht für die Einheit und/oder die Verflüssigungsmittel (3) bestimmt sind.

10. Anlage nach einem der vorhergehenden Ansprüche, bei der die Einheit (2) und/oder die Zerlegungsanlage und/oder die Verflüssigungsmittel nur mit Mitteln zum Verbrauch von Niederspannungsstrom und/oder Mitteln zur Erzeugung von Niederspannungsstrom verbunden sind und mit Mitteln zur Erzeugung und zum Verbrauch von Mittel- und Hochspannungsstrom nur über Mittel zur Erzeugung von Niederspannungsstrom und/oder Mittel zum Verbrauch von Niederspannungsstrom verbunden sind.

11. Anlage nach einem der vorhergehenden Ansprüche, umfassend Mittel, um eine Komponente der Luft in flüssiger Form aus einer Zerlegungskolonne (41) zu entnehmen.

12. Anlage nach einem der Ansprüche 1 bis 11, bei der mindestens eines der Fluide der Luft an der Reaktion beteiligt ist, die in der Einheit (2) stattfindet.

13. Integriertes Verfahren zur Erzeugung von Gas der Luft in gasförmiger oder flüssiger Form und mindestens einer Reaktion, bei der ein Fluid der Luft, das von einem Gerät zur Erzeugung von Fluid der Luft (P), umfassend eine Luftzerlegungsanlage (41) mit einem Hauptluftverdichter (44), erzeugt wird, zu einer Einheit (2), die ein Fluid der Luft verbraucht, befördert wird, in der eine Reaktion stattfindet und von der Reaktion abgeleiteter Dampf mittels einer Vorrichtung (10, 20, 30, 40, 150) mechanische Energie erzeugt, und wobei
i) eine/die Vorrichtung (40) mindestens den Hauptluftverdichter (44) der Luftzerlegungsanlage und mindestens einen Luftüberdruckerzeuger (70) antreibt, die Luftzerlegungsanlage (41) mindestens eine Komponente der Luft in flüssiger Form erzeugt, indem eine Flüssigkeit aus der Luftzerlegungsanlage abgezogen wird, und mindestens die Vorrichtung und der angetriebene Verdichter (14, 44) nur Niederspannungsstrom verbrauchen und/oder erzeugen, wobei dieser Niederspannungsstrom von einer Mittelspannungs- und/oder Hochspannungsstromquelle kommt oder für diese bestimmt ist, und gegebenenfalls
ii) eine/die Vorrichtung (30) mindestens einen Zyklusverdichter (34) von Mitteln (3) zur Verflüssigung eines Gases, das von der Luftzerlegungsanlage kommt, antreibt, und gegebenenfalls
iii) eine/die Vorrichtung (20, 150) mindestens einen Verdichter (24, 154) von Gas, das von der Einheit (2) kommt oder für diese bestimmt ist, antreibt,
**dadurch gekennzeichnet, dass** der Hauptluftverdichter und der Überdruckerzeuger nur von einer dieser Vorrichtungen (40) angetrieben werden.

14. Verfahren nach Anspruch 13, bei dem ein Teil des von der Einheit abgeleiteten Wasserdampfes mechanische Energie in einer zweiten Vorrichtung (10, 20, 30, 40, 150) erzeugt, die mindestens einen zweiten Verdichter (14, 24, 34, 44, 154) antreibt.

15. Verfahren nach Anspruch 14, bei dem der zweite Verdichter (14, 24, 34, 44) ein Gas, das von der Luftzerlegungsanlage kommt, oder ein Zyklusgas der Mittel zur Verflüssigung eines Gases, das von der Zerlegungsanlage kommt, oder ein Gas, das von der Einheit (2) kommt oder ausgeht, verdichtet.

16. Verfahren nach einem der Ansprüche 13 bis 15, bei dem
a) Druckluft von einem Verdichter (44, 70, 71) der Zerlegungsanlage (41) zu der Einheit (2) befördert wird (100), und/oder
b) ein gasförmiger, gegebenenfalls verdichteter Sauerstoffdurchsatz (28, 38) von der Zerlegungsanlage zu der Einheit befördert wird, und/oder
c) ein Flüssigsauerstoffdurchsatz (300) gegebenenfalls unter Druck von der Zerlegungsanlage zu der Einheit befördert wird, und/oder
d) flüssiger Stickstoff (17) gegebenenfalls unter Druck von den Verflüssigungsmitteln (3) oder der Zerlegungsanlage (41) zu der Einheit befördert wird, und/oder
e) gegebenenfalls verdichteter gasförmiger Stickstoff (31, 74) von der Zerlegungsanlage zu der Einheit befördert wird, und/oder
f) gasförmiges oder gegebenenfalls verdichtetes oder unter Druck gehaltenes Argon von der Zerlegungsanlage zu der Einheit befördert wird.

17. Verfahren nach einem der Ansprüche 13 bis 16, bei dem die gesamte nicht von der Einheit (2) verbrauchte und von der (den) Vorrichtung(en) (10, 20, 30, 40, 150) erzeugte Energie dazu dient, mindestens einen (die) Verdichter des Luftdestillationsgeräts und/oder die Verflüssigungsmittel (3) anzutreiben.

18. Verfahren nach einem der Ansprüche 13 bis 17, bei dem die gesamte Gasverdichtungsenergie des Luftdestillationsgeräts von der (den) Vorrichtung(en) der Anlage geliefert wird.

19. Verfahren nach einem der Ansprüche 13 bis 18, bei dem der Hauptluftverdichter (44) ein Verdichter ist, der nur für die Versorgung der Luftzerlegungsanlage bestimmt ist.

20. Verfahren nach einem der Ansprüche 13 bis 18, bei dem der Hauptverdichter (44) mindestens ein Gerät (1, 2), bei dem es sich nicht um die Luftzerlegungsanlage handelt, versorgt.

21. Verfahren nach einem der Ansprüche 13 bis 20, bei dem die Luftzerlegungsanlage (41) mindestens ein Fluid (23, 25, 26, 100) erzeugt, das nicht für die Einheit und die Verflüssigungsmittel bestimmt ist.

22. Verfahren nach einem der Ansprüche 13 bis 21, bei dem die Einheit (2) und/oder die Zerlegungsanlage und/oder die Verflüssigungsmittel nur Niederspannungsstrom verbrauchen und/oder nur Niederspannungsstrom erzeugen, wobei dieser Niederspannungsstrom von einer Mittel- oder Hochspannungsstromquelle kommt oder für diese bestimmt ist.

23. Verfahren nach einem der Ansprüche 13 bis 22, bei dem mindestens ein Fluid der Luft, das von dem Erzeugungsgerät kommt, an der Reaktion beteiligt ist, die in der Einheit (2) stattfindet.

24. Verfahren nach einem der Ansprüche 13 bis 23, bei dem eine Komponente der Luft in flüssiger Form aus einer Kolonne der Zerlegungsanlage gegebenenfalls als flüssiges Produkt abgezogen wird.

25. Verfahren nach einem der Ansprüche 13 bis 24, bei dem die Einheit und/oder die Zerlegungsanlage und/oder die Verflüssigungsmittel direkt Mitteloder Hochspannungsstrom ausschließlich während der Phase des Startens der Einheit und/oder der Anlage und/oder der Verflüssigungsmittel verbrauchen und/oder erzeugen.

26. Verfahren nach einem der Ansprüche 13 bis 25, bei dem mindestens eine Vorrichtung und/oder mindestens ein angetriebener Verdichter (14, 24, 34, 44, 154) direkt Mittel- oder Hochspannungsstrom ausschließlich während der Phase des Startens derselben (desselben) verbrauchen und/oder erzeugen.

27. Verfahren nach einem der Ansprüche 13 bis 26, bei dem mindestens ein Verdichter (14, 24, 34, 44, 154) der Anlage und/oder der Einheit und/oder des Erzeugungsgeräts und/oder der Verflüssigungsmittel kontinuierlich direkt Mittelspannungsstrom verbraucht und/oder erzeugt.

28. Integriertes Verfahren zur Erzeugung von Gas oder Flüssigkeit nach einem der Ansprüche 13 bis 27, bei dem das Gerät zur Erzeugung von Fluid der Luft, umfassend eine Hauptluftzerlegungsanlage, durch ein Gerät zur Erzeugung von Wasserstoff, Stickstoff, Kohlenmonoxid oder Methan auf Basis eines Gemisches, das mindestens 1% von mindestens zwei dieser Komponenten aufweist, umfassend einen Hauptverdichter des Gemisches, ersetzt wird, und bei dem ein Gas oder eine Flüssigkeit von dem Gerät zur Erzeugung von Wasserstoff, Stickstoff, Kohlenmonoxid oder Methan zu der Einheit befördert wird, die das Gas oder die Flüssigkeit verbraucht.

## Claims

1. Combined plant comprising: at least one unit (2) for consuming a fluid from the air, in which at least one reaction occurs, at least one apparatus (P) for producing fluid from the air comprising an air separation apparatus (41) having a main air compressor (44) and at least one air supercharger (70), means (17, 31, 74, 100) for sending at least one fluid from the air from the production apparatus to the unit; and at least one device (10, 20, 30, 40) with which at least one portion of the steam derived from the unit allows mechanical energy to be produced;
i) a/the device (40) drives at least the main air compressor and at least one air supercharger (70), the production apparatus comprises means for producing a component of air in liquid form, comprising at least means (64, 65) for withdrawing liquid from a separation apparatus and at least the driven compressor and the device driving the compressor are connected, electrically, only to means of generating low-voltage electricity and/or only to means of consuming low-voltage electricity and are connected to means of generating and consuming medium-voltage and/or high-voltage electricity only through means of generating low-voltage electricity and/or means of consuming low-voltage electricity, and optionally
ii) a/the device drives at least one cycle compressor (34) of means of liquefaction (3) of a gas coming from the air separation apparatus (41) and optionally
iii) a/the device drives at least one compressor (24, 154) for compressing a gas output by or intended for the unit,
**characterized in that** the main air compressor and the supercharger are driven by one of these devices alone.

2. Plant according to Claim 1, comprising at least one other device (10, 20, 30, 40, 150) with which a portion (5, 12) of the steam derived from the unit allows mechanical energy to be produced and which drives at least one second compressor (14, 24, 34, 44, 154).

3. Plant according to Claim 2, in which the second compressor (14, 24, 34, 44, 154) comprises a gas coming from an air separation apparatus or a cycle gas of the means (3) of liquefaction of a gas coming from the separation apparatus or a gas output by *or* intended for the unit (2).

4. Plant according to one of the preceding claims, in which the means for sending a fluid from the air from the production apparatus (P) to the unit (2) comprise at least:
a) means (100) for sending compressed air from a compressor (44, 70, 71) of the separation apparatus (41) to the unit (2) and/or
b) means (28, 38) for sending a stream of gaseous oxygen from the separation apparatus to the unit and/or
c) means (300) for sending liquid oxygen from the separation apparatus to the unit and/or
d) means (17) for sending liquid nitrogen from the liquefaction means (3) or from the separation apparatus (41) to the unit and/or
e) means (31, 74) for sending gaseous nitrogen from the separation apparatus to the unit and/or
f) means for sending gaseous or liquid argon from the separation apparatus to the unit.

5. Plant according to one of the preceding claims, in which all the energy not consumed by the unit (2), or by other apparatuses associated with the unit, and generated by the device(s) (10, 20, 30, 40, 150) serves for driving one or more compressors of the air production apparatus (P) and/or the liquefaction means.

6. Plant according to one of the preceding claims, in which all or some of the energy for compressing gas from the air separation apparatus is delivered by the device(s) (10, 20, 30, 40, 150) of the plant.

7. Plant according to one of the preceding claims, in which the main compressor (44) is a dedicated compressor feeding only the air separation apparatus.

8. Plant according to one of Claims 1 to 6, in which the main air compressor (44) feeds at least one apparatus other than the air separation apparatus.

9. Plant according to one of the preceding claims, in which the air separation apparatus produces at least one gas (23, 25, 26, 100) and/or at least one liquid not intended for the unit and/or for the liquefaction means (3).

10. Plant according to one of the preceding claims, in which the unit (2) and/or the separation apparatus and/or the liquefaction means are connected only to means of consuming low-voltage electricity and/or means of generating low-voltage electricity and are connected to means of generating and consuming medium-voltage and high-voltage electricity only through means of generating low-voltage electricity and/or means of consuming low-voltage electricity.

11. Plant according to one of the preceding claims, according to which [sic] comprising means for extracting a component of air in liquid form from a separation column (41).

12. Plant according to one of Claims 1 to 11, in which at least one of the fluids from the air participates in the reaction which is carried out in the unit (2).

13. Integrated process for production of a gas from the air in gaseous or liquid form and of at least one reaction, in which process a fluid from the air, generated by an apparatus (P) for production of fluid from the air comprising an air separation apparatus (41) having a main air compressor (44), is sent to a unit (2), which consumes a fluid from the air, in which a reaction is carried out, steam derived from the reaction produces mechanical energy by means of a device (10, 20, 30, 40, 150) and
i) a/the device (40) drives at least the main air compressor (44) of the air separation apparatus and at least one air supercharger (70), the air separation apparatus (41) produces at least one component of air in liquid form by withdrawing a liquid from the air separation apparatus and at least the device and the driven compressor (14, 44) consume and/or generate only low-voltage electricity, this low-voltage electricity coming from or intended for a source of medium-voltage and/or high-voltage electricity and optionally
ii) a/the device (30) drives at least a cycle compressor (34) of means (3) for liquefying a gas coming from the air separation apparatus and optionally
iii) a/the device (20, 150) drives at least a gas compressor (24, 154) intended for or output by the unit (2),

14. Process according to Claim 13, in which a portion of the steam derived from the unit produces mechanical energy in a second device (10, 20, 30, 40, 150) which drives at least a second compressor (14, 24, 34, 44, 154).

15. Process according to Claim 14, in which the second compressor (14, 24, 34, 44) compresses a gas coming from an air separation apparatus or a cycle gas of means of liquefaction of a gas coming from the separation apparatus or a gas output by or coming from the unit (2).
**characterized in that** the main air compressor and the supercharger are driven by one (40) of these devices alone.

16. Process according to one of Claims 13 to 15, in which
a) compressed air is sent (100) from a compressor (44, 70, 71) of the separation apparatus (41) to the unit (2) and/or
b) a stream of possibly compressed gaseous oxygen (28, 38) is sent from the separation apparatus to the unit and/or
c) a stream of possibly pressurized liquid oxygen (300) is sent from the separation apparatus to the unit and/or
d) possibly pressurized liquid nitrogen (17) is sent from the liquefaction means (3) or from the separation apparatus (41) to the unit and/or
e) possibly compressed gaseous nitrogen (31, 74) is sent from the separation apparatus to the unit and/or
f) possibly compressed or pressurized gaseous argon is sent from the separation apparatus to the unit.

17. Process according to one of Claims 13 to 16, in which all the energy not consumed by the unit (2) generated by the device(s) (10, 20, 30, 40, 150), serves to drive at least one or more compressors of the air distillation apparatus and/or the liquefaction means (3).

18. Process according to one of Claims 13 to 17, in which all the energy for compressing gas from the air distillation apparatus is delivered by the device(s) of the plant.

19. Process according to one of Claims 13 to 18, in which the main air compressor (44) is a dedicated compressor feeding only the air separation apparatus.

20. Process according to one of Claims 13 to 18, in which the main compressor (44) feeds at least one apparatus (1, 2) other than the air separation apparatus.

21. Process according to one of Claims 13 to 20, in which the air separation apparatus (41) produces at least one fluid (23, 25, 26, 100) not intended for the unit and for the liquefaction means.

22. Process according to one of Claims 13 to 21, in which the unit (2) and/or the separation apparatus and/or the liquefaction means consumes (consume) only low-voltage electricity and/or generates (generate) only low-voltage electricity, this low-voltage electricity coming from or intended for a source of medium-voltage or high-voltage electricity.

23. Process according to one of Claims 13 to 22, in which at least one fluid from the air coming from the production apparatus participates in the reaction which is carried out in the unit (2).

24. Process according to one of Claims 13 to 23, in which a component of air in liquid form is withdrawn from a column of the separation apparatus, possibly as liquid product.

25. Process according to one of Claims 13 to 24, in which the unit and/or the separation apparatus and/or the liquefaction means consume and/or generate, directly, medium-voltage or high-voltage electricity exclusively during the start-up phase of the unit and/or of the apparatus and/or of the liquefaction means.

26. Process according to one of Claims 13 to 25, in which at least one device and/or at least one driven compressor (14, 24, 34, 44, 154) consumes (consume) and/or generates (generate), directly, medium-voltage or high-voltage electricity exclusively during the start-up phase of the said device(s) and/or compressor(s).

27. Process according to one of Claims 13 to 26, in which at least one compressor (14, 24, 34, 44, 154) of the plant and/or the unit and/or the production apparatus and/or the liquefaction means consumes and/or generates, directly, medium-voltage electricity continuously.

28. Integrated process for production of gas or of liquid according to one of Claims 13 to 27, in which the apparatus for production of fluid from the air, comprising a main air separation apparatus, is replaced with an apparatus for production of hydrogen, nitrogen, carbon monoxide or methane from a mixture comprising at least 1% of at least two of these components, having a main compressor for compressing the mixture, and in which process a gas or a liquid from the hydrogen, nitrogen, carbon monoxide or methane production apparatus is sent to the unit, which consumes gas or liquid.
